# EUROPÄISCHE PATENTANMELDUNG

(11) **EP 2 860 431 A1**
(43) Veröffentlichungstag der Anmeldung: **15.04.2015**
(21) Anmeldenummer: 14184701.2
(22) Anmeldetag: 15.09.2014
(51) Int. Cl.: F16L 13/14, F16L 27/04, F16D 48/02

(54) **Verbindungsanordnung**

(30) Priorität: 14.10.2013 DE 102013220636
(71) Anmelder: Schaeffler Technologies AG & Co. KG, 91074 Herzogenaurach (DE)
(72) Erfinder: Chevet, Alexandre, 45160 Olivet (FR); Rocquet, Stephane, 45640 Sandillon (FR)

(57) **Zusammenfassung**

Die Erfindung betrifft eine Verbindungsanordnung zum Anschluss einer Druckleitung (L) an ein hydraulisches System, insbesondere an ein Kupplungsausrücksystem eines Kraftfahrzeuges, mit zumindest einem ersten, als Anschlussstutzen (1) ausgebildeten, Verbindungselement und mit zumindest einem zweiten, als Anschlussbuchse (2) ausgebildeten, Verbindungselement. Erfindungsgemäß ist zwischen den beiden Verbindungselementen ein Adapter (3) angeordnet, der zumindest mit einem der beiden Verbindungselemente (1,2) schwenkbeweglich verbunden ist.

## Beschreibung

Die vorliegende Erfindung bezieht sich auf eine Verbindungsanordnung zum Anschluss einer Druckleitung an ein hydraulisches System, insbesondere an ein Kupplungsausrücksystem eines Kraftfahrzeuges, mit zumindest einem ersten, als Anschlussstutzen ausgebildeten, Verbindungselement und mit zumindest einem zweiten, als Anschlussbuchse ausgebildeten, Verbindungselement.

Zur Herstellung einer mechanischen Verbindung, beispielsweise mit anderen Leitungen oder Bauteilen, weisen Druckleitungen endseitig Konnektoren auf, wobei die Enden als Steckteil (Anschlussstutzen) oder als Hülsenteil (Anschlussbuchse) ausgebildet sein können. Dementsprechend ist das zugehörige Ende der zu verbindenden Leitung oder der zugeordnete Anschluss des zu verbindenden Bauteils komplementär als Hülsenteil oder als Steckteil ausgeführt. Zur Gewährleistung der Dichtheit ist die Verbindungsanordnung üblicherweise mit einem Dichtelement versehen und weist zum Befestigen der Verbindungselemente (Steckteil und Hülsenteil) Arretierungs- oder Halteelemente auf.

So wird in der DE 10 2007 003 048 A1 beispielsweise eine Steckverbindungsanordnung zum Verbinden von Druckleitungen eines hydraulischen Systems beschrieben, bei welcher als Arretierung zum gemeinsamen Befestigen der Verbindungselemente eine radial montierbare Klammer eingesetzt wird, deren elastische Schenkel bei der Montage an den Umfang des Anschlussstutzens gepresst werden.

Eine in der DE 10 2005 044 304 A1 offenbarte Anschlussanordnung zum Anschließen einer Rohrleitung an ein hydraulisches Kupplungsausrücksystem weist zumindest ein an einem Endabschnitt der Rohrleitung befestigbares Anschlussorgan auf, welches an einem an dem Ausrücksystem befestigten Gegenstück anschließbar ist. Zum Befestigen umgibt das Anschlussorgan formschlüssig zumindest einen radial vorstehenden Vorsprung der Rohrleitung, welcher durch entsprechende Stauchung der Rohrleitung als Wulst ausgebildet ist. Dazu weist das Anschlussorgan zwei Gehäusehälften mit Zentriermitteln - Zentrierstifte bzw. mit diesen korrespondierende Aufnahmen - auf, welche miteinander im Bereich des radialen Vorsprungs an der Rohrleitung befestigbar sind. In einer anderen Ausführung ist ein mit Schlitzen versehenes und somit bei der Montage aufweitbares Gehäuse vorgesehen. Durch das Umschließen des Vorsprungs der Rohrleitung wird insbesondere eine Abstützung von auftretenden Axialkräften ermöglicht. Allerdings sind diese bekannten technischen Lösungen mit einem relativ großen konstruktiven Aufwand verbunden.

Es ist auch bekannt, in einer hydraulischen Strecke das Verbinden von Leitungen untereinander oder mit anderen Bauteilen über ein Crimpverfahren zu realisieren. Durch Verquetschen (Crimpen) eines Anschlussstutzens einer ersten Leitung mit einer Anschlussbuchse einer anderen Leitung oder eines Bauteils wird eine formschlüssige Verbindung hergestellt, die üblicherweise nicht demontierbar ist.

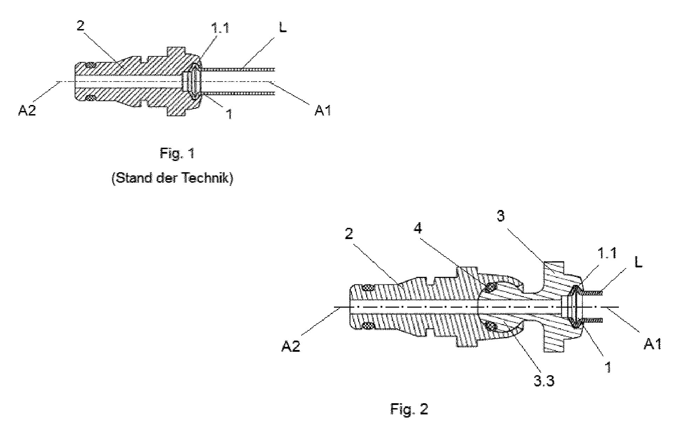

In Fig. 1 ist beispielsweise eine bekannte, mittels Crimpen hergestellte, Verbindung eines an dem Ende einer Rohrleitung ausgebildeten Anschlussstutzens mit einer Anschlussbuchse gezeigt. Dabei wird der dem radialen Vorsprung (Wulst) des Anschlussstutzens zugeordnete Bereich der Anschlussbuchse gequetscht/gecrimpt, so dass eine kraft- und formschlüssige Verbindung hergestellt ist. Damit ist eine schnell und ohne konstruktiven Aufwand durchzuführende Verbindungsanordnung geschaffen. Um einen eventuell auftretenden Achsversatz bzw. Winkelfehler zwischen den Anschlüssen zu kompensieren, ist an der üblicherweise als Stahlrohr ausgebildeten Rohrleitung ein flexibler, beispielsweise durch ein EPDM-Material gebildeter, Bereich vorgesehen. Allerdings steht häufig in hydraulischen Systemen nur ein geringer Bauraum zur Verfügung, so dass aus Platzgründen kein derartiger flexibler Bereich zwischen den Anschlüssen angebracht werden kann. Somit können Winkelfehler nicht kompensiert werden, was einen vorzeitigen Verschleiß der Verbindungselemente mit entsprechender Auswirkung auf die Funktionsweise des hydraulischen Systems zur Folge hat.

Die Aufgabe der Erfindung besteht darin, eine Verbindungsanordnung zum Anschluss einer Druckleitung an ein hydraulisches System, insbesondere an ein Kupplungsausrücksystem eines Kraftfahrzeuges, vorzuschlagen, bei welcher Achs- und/oder Winkelabweichungen problemlos kompensiert werden können.

Die Aufgabe wird mit den Merkmalen des ersten Anspruchs gelöst. Vorteilhafte Ausgestaltungen ergeben sich aus den Unteransprüchen.

Bei einer Verbindungsanordnung zum Anschluss einer Druckleitung an ein hydraulisches System, insbesondere an ein Kupplungsausrücksystem eines Kraftfahrzeuges, mit zumindest einem ersten, als Anschlussstutzen ausgebildeten, Verbindungselement und mit zumindest einem zweiten, als Anschlussbuchse ausgebildeten, Verbindungselement ist erfindungsgemäß zwischen den beiden Verbindungselementen ein Adapter angeordnet, der zumindest mit einem der beiden Verbindungselemente schwenkbeweglich verbunden ist.

Vorzugsweise ist der Adapter mit der Anschlussbuchse schwenkbeweglich und mit dem Anschlussstutzen starr verbunden. Dabei steht in vorteilhafter Weise ein kugelförmig ausgebildeter Kopf des Adapters mit einer komplementär ausgebildeten Ausnehmung der Anschlussbuchse schwenkbeweglich in Eingriff.

Weiterhin ist an dem kugelförmigen Kopf des Adapters ein Dichtelement in einer radial umlaufenden Nut angeordnet.

In einem adapterseitigen Endbereich des Anschlussstutzens ist eine radiale Wulst ausgebildet, die in einem Aufnahmebereich des Adapters formschlüssig aufgenommen ist.

Die Verbindung zwischen Anschlussstutzen und Adapter ist vorzugsweise ebenso mittels Crimpen herstellbar wie die Verbindung von Anschlussbuchse und Adapter.

In vorteilhafter Weise sind der Anschlussstutzen und der Adapter als vormontierte Baugruppe mit der Anschlussbuchse verbindbar. Dabei weisen der Anschlussstutzen und der Adapter eine gemeinsame Achse auf, welche gegenüber einer Achse der Anschlussbuchse um einen Winkel verschwenkbar ist.

In vorteilhafter Weise kann der Adapter auch in den Anschlussstutzen integriert oder der Anschlussstutzen in der Form des Adapters ausgebildet sein.

Die Erfindung wird nachstehend anhand eines Ausführungsbeispiels und zugehöriger Zeichnungen näher erläutert. Es zeigen in schematischer Schnittdarstellung:
Fig. 1 eine Verbindungsanordnung des Standes der Technik,
Fig. 2 eine erfindungsgemäße Verbindungsanordnung,
Fig. 3 eine Baugruppe der erfindungsgemäßen Verbindungsanordnung vor dem Verbinden,
Fig. 4 die Baugruppe nach Fig. 3 während des Verbindungsvorganges,
Fig. 5 die Baugruppe nach Fig. 3 nach dem Verbinden,
Fig. 6 die erfindungsgemäße Verbindungsanordnung nach Fig. 2 vor dem Verbinden,
Fig. 7 die erfindungsgemäße Verbindungsanordnung während des Verbindungsvorganges,
Fig. 8 die erfindungsgemäße Verbindungsanordnung nach dem Verbinden,
Fig. 9 die erfindungsgemäße Verbindungsanordnung in einer Winkelstellung.

In Fig. 1 ist eine Verbindungsanordnung gemäß dem Stand der Technik dargestellt. Diese wird im Wesentlichen aus den Verbindungselementen Anschlussstutzen 1 und Anschlussbuchse 2 gebildet. Der Anschlussstutzen 1 mit seiner Achse A1 verkörpert hierbei das Ende einer metallischen Druckleitung L einer hydraulischen Strecke und die Anschlussbuchse 2 mit ihrer Achse A2 entweder das Ende einer weiteren Leitung oder das Ende oder den Anschlussbereich eines zu verbindenden Bauteils. Der Anschlussstutzen 1 ist endseitig mit einer umlaufenden Wulst 1.1 versehen, welche von der Aufnahmebuchse 2 aufgenommen ist. Durch Verquetschen/Crimpen der Enden der Aufnahmebuchse 2 ist ein Formschluss mit dem Anschlussstutzen 1 hergestellt, wobei das Ende der Anschlussbuchse 2 die Wulst 1.1 des Anschlussstutzens 1 umgreift und somit eine im Prinzip unlösbare Verbindung der beiden Verbindungselemente 1, 2 verwirklicht.

Auf den Nachteil dieser bekannten Steckverbindung wurde bereits eingegangen - er besteht darin, dass die üblicherweise von einem Stahlrohr gebildete Druckleitung L eine starre Verbindung darstellt, die keinerlei Winkelfehler oder Achsversatz kompensieren kann. Problematisch ist das vor allem dann, wenn aus Platzmangel zwischen den Anschlüssen kein zusätzlicher flexibler Bereich angebracht werden kann.

So ist im vorliegenden Ausführungsbeispiel der Einsatz eines konzentrischen Nehmerzylinders (CSC) mit einem Elektropumpensystem speziell für ein Robotergetriebe vorgesehen, bei welchem unmittelbar nach dem Gehäuse des CSC ein Hochdruckanschluss mit der Elektropumpe realisiert werden muss. Hier ist es - bedingt durch die geringe Länge des Stahlrohres/der Druckleitung L - nicht möglich, in bekannter Art und Weise einen flexiblen Bereich zu implementieren.

In Fig. 2 ist die erfindungsgemäße Verbindungsanordnung in einer schematischen Schnittdarstellung gezeigt. Mit der Fig. 1 übereinstimmende bzw. die gleiche Funktion ausübende Bauteile sind hierbei mit gleichen Bezugszeichen versehen.

Dabei sind als erstes Verbindungselement der Anschlussstutzen 1 mit der Achse A1 und als zweites Verbindungselement die Anschlussbuchse 2 mit der Achse A2 vorgesehen. Der Anschlussstutzen 1 kann auch hier das Ende der metallischen Druckeitung L einer hydraulischen Strecke sein, und die Anschlussbuchse 2 kann entweder das Ende einer weiteren Leitung oder das Ende oder den Anschlussbereich eines zu verbindenden Bauteils darstellen. Der Anschlussstutzen 1 weist endseitig die als radial vorstehender Vorsprung ausgebildete Wulst 1.1 auf. Erfindungsgemäß ist noch ein weiteres Verbindungselement, ein Adapter 3, zwischen Anschlussstutzen 1 und Anschlussbuchse 2 angeordnet.

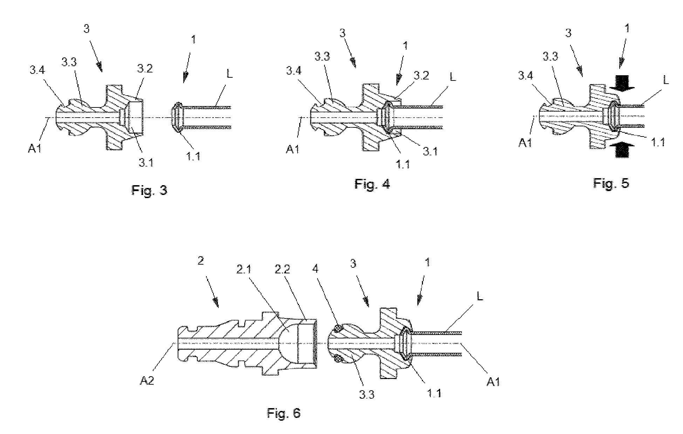

Der vorzugsweise metallische (Stahl) Adapter 3 weist einen Aufnahmebereich 3.1 auf (s. Fig. 3), in welchem das Ende des Anschlussstutzens 1 mit der Wulst 1.1 aufgenommen ist. Durch ein Crimpverfahren (s. Fig. 3 bis Fig. 5) ist ein an dem Ende des Adapters 3 befindlicher Crimpbereich 3.2 mit der Wulst 1.1 verquetscht. Dem Aufnahmebereich 3.1 axial gegenüberliegend weist der Adapter 3 einen kugelförmigen Kopf 3.3 auf, der in einer komplementär ausgebildeten, kugelkalottenförmigen Ausnehmung 2.1 der Anschlussbuchse 2 aufgenommen ist. Dabei ist zumindest ein als Dichtring ausgebildetes Dichtelement 4 in einer radial umlaufenden Nut 3.4 des Kugelkopfes 3.3 angeordnet, welches zur Ausnehmung 2.1 der Anschlussbuchse 2 hin abdichtet. Auch hier erfolgt mittels Crimpen die Befestigung des Adapters 3 an der Anschlussbuchse 2. Dabei wird ein an dem adapterseitigen Ende der Anschlussbuchse 2 befindlicher Crimpbereich 2.2 mit dem Kugelkopf 3.3 des Adapters 3 verquetscht. Bei der in Fig. 2 gezeigten Verbindungsanordnung fällt die Achse A2 der Anschlussbuchse 2 mit der Achse A1 des Anschlussstutzens 1 und somit auch mit der Achse des dazwischen liegenden Adapters 3 zusammen.

In den Fig. 3, Fig. 4 und Fig. 5 sind die Montageschritte zur Herstellung einer Verbindung von Anschlussstutzen 1 und Adapter 3 zu einer eine Vormontageeinheit darstellenden Baugruppe aufgezeigt.

Die Fig. 3 zeigt den Anschlussstutzen 1 und den Adapter 3 vor dem Verbinden.

In der Fig. 4 ist ein Montageschritt dahingehend erfolgt, dass der Anschlussstutzen 1 mit seinem die Wulst 1.1 ausbildenden Ende in den Aufnahmebereich 3.1 des Adapters 3 eingebracht ist.

Die Fig. 5 zeigt den Endzustand nach dem Verbinden mittels Crimpen. Die beiden radial nach innen gerichteten schwarzen Pfeile zeigen die Richtung der beim Verquetschen des Endes des Adapters 3 mit der Wulst 1.1 des Anschlussstutzens 1 wirkenden Kraft an. Die so verbundenen Anschlussstutzen 1 und Adapter 3 stellen eine vormontierte Baugruppe dar, welche nun zur Endmontage mit der Anschlussbuchse 2 verbunden werden muss.

Die Fig. 6, Fig. 7 und Fig. 8 zeigen, wie die vormontierte Baugruppe aus Anschlussstutzen 1 und Adapter 3 mit der Anschlussbuchse 2 verbunden wird.

In Fig. 6 befinden sich die Anschlussbuchse 2 und die bereits vormontierten Anschlussstutzen 1 und Adapter 3 noch vor dem Verbindungsvorgang. Allerdings ist hier bereits das Dichtelement 4 in die Nut 3.4 des Adapters 3/Kugelkopfes 3.3 eingebracht.

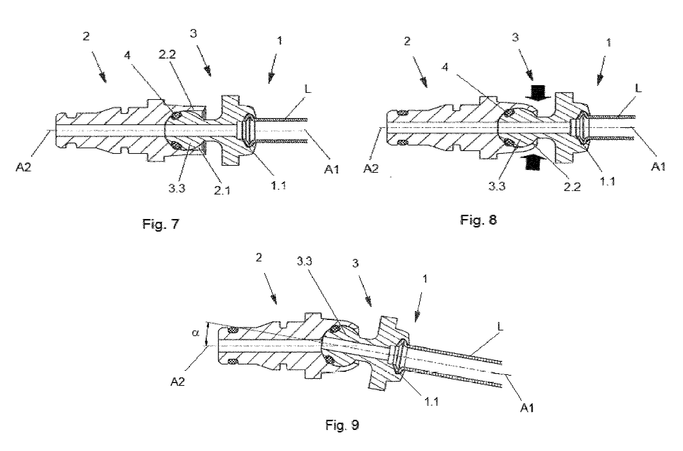

In Fig. 7 befindet sich der Kugelkopf 3.3 des Adapters 3 in Eingriff mit der Ausnehmung 2.1 der Anschlussbuchse 2. Es hat aber noch keine Befestigung der Verbindungselemente stattgefunden.

Die Fig. 8 zeigt den Endzustand der Verbindungsanordnung nach dem Verbinden von Anschlussbuchse 2 und Adapter 3 mittels Crimpen. Auch hier zeigen die beiden radial nach innen gerichteten schwarzen Pfeile die Richtung der beim Verquetschen des Crimpbereiches 2.2 der Anschlussbuchse 2 mit dem Kugelkopf 3.3 des Adapters 3 wirkenden Kraft an.

Fig. 9 zeigt schließlich die fertig montierte Verbindungsanordnung in einer möglichen Winkelstellung der aus Anschlussstutzen 1 und Adapter 3 bestehenden Baugruppe, die auf Grund ihrer starren Verbindung eine gemeinsame Achse A1 besitzen, in Bezug auf die Anschlussbuchse 2. Durch die Ausbildung des Adapters 3, dessen Kugelkopf 3.3 mit der komplementären Ausnehmung 2.1 der Anschlussbuchse 2 in der Art einer Kugelgelenkverbindung zusammenwirkt, ist eine Schwenkbewegung des Adapters 3 - und damit des an ihm befestigten Anschlussstutzens 1 - um einen Winkel α gegenüber der Achse A2 der Anschlussbuchse 2 durchführbar. So können eventuell vorhandene Winkel- oder auch Achsabweichungen ausgeglichen werden.

Im hier beschriebenen Ausführungsbeispiel stellt der Adapter 3 ein separates Verbindungselement dar. Es ist aber auch möglich, den Adapter 3 in den Anschlussstutzen 1 zu integrieren bzw. der Anschlussstutzen 1 kann entsprechend der vorgeschlagenen Ausbildung des Adapters 3 mit einem kugelförmigen Kopf 3.2 versehen sein, der schwenkbeweglich in der Ausnehmung 2.1 der Anschlussbuchse 2 gelagert ist.

Die erfindungsgemäß vorgeschlagene Verbindungsanordnung kann bevorzugt bei hydraulischen Ausrücksystemen mit Hochdruckleitungen aus Metall (Stahlrohre) zum Einsatz kommen. Sie ist aber auch auf anderen Gebieten einsetzbar, bei welchen Verbindungen von Druckleitungen untereinander bzw. mit anderen Bauteilen zu realisieren sind. Dabei können die Verbindungselemente auch durch eine entsprechende Ausbildung der Enden der Druckleitungen geformt werden.

### Bezugszeichenliste

- 1: Anschlussstutzen
- 1.1: Wulst
- 2: Anschlussbuchse
- 2.1: kugelkalottenförmige Ausnehmung
- 2.2: Crimpbereich
- 3: Adapter
- 3.1: Aufnahmebereich
- 3.2: Crimpbereich
- 3.3: kugelförmiger Kopf/Kugelkopf
- 3.4: Nut
- 4: Dichtelement/Dichtring
- A1: Achse
- A2: Achse
- L: Druckleitung/Stahlrohr
- α: Winkel

## Patentansprüche

1. Verbindungsanordnung zum Anschluss einer Druckleitung (L) an ein hydraulisches System, insbesondere an ein Kupplungsausrücksystem eines Kraftfahrzeuges, mit zumindest einem ersten, als Anschlussstutzen ausgebildeten, Verbindungselement (1) und mit zumindest einem zweiten, als Anschlussbuchse ausgebildeten, Verbindungselement (2), **dadurch gekennzeichnet, dass** zwischen den beiden Verbindungselementen (1, 2) ein Adapter (3) angeordnet ist, der zumindest mit einem der beiden Verbindungselemente (1, 2) schwenkbeweglich verbunden ist.

2. Verbindungsanordnung nach Anspruch 1, **dadurch gekennzeichnet, dass** der Adapter (3) mit der Anschlussbuchse (2) schwenkbeweglich und mit dem Anschlussstutzen (1) starr verbunden ist.

3. Verbindungsanordnung nach Anspruch 1 oder 2, **dadurch gekennzeichnet, dass** ein kugelförmig ausgebildeter Kopf (3.3) des Adapters (3) mit einer komplementär ausgebildeten Ausnehmung (2.1) der Anschlussbuchse (2) schwenkbeweglich in Eingriff steht.

4. Verbindungsanordnung nach Anspruch 3, **dadurch gekennzeichnet, dass** an dem kugelförmigen Kopf (3.3) des Adapters (3) ein Dichtelement (4) in einer radial umlaufenden Nut (3.4) angeordnet ist.

5. Verbindungsanordnung nach einem der Ansprüche 1 bis 4, **dadurch gekennzeichnet, dass** in einem adapterseitigen Endbereich des Anschlussstutzens (1) eine radiale Wulst (1.1) ausgebildet ist, die in einem Aufnahmebereich (3.1) des Adapters (3) formschlüssig aufgenommen ist.

6. Verbindungsanordnung nach einem der Ansprüche 1 bis 5, **dadurch gekennzeichnet, dass** die Verbindung zwischen Anschlussstutzen (1) und Adapter (3) mittels Crimpen herstellbar ist.

7. Verbindungsanordnung nach einem der Ansprüche 1 bis 6, **dadurch gekennzeichnet, dass** die Verbindung zwischen Anschlussbuchse (2) und Adapter (3) mittels Crimpen herstellbar ist.

8. Verbindungsanordnung nach einem der Ansprüche 1 bis 7, **dadurch gekennzeichnet, dass** der Anschlussstutzen (1) und der Adapter (3) als vormontierte Baugruppe mit der Anschlussbuchse (2) verbindbar sind.

9. Verbindungsanordnung nach einem der Ansprüche 1 bis 8, **dadurch gekennzeichnet, dass** die aus Anschlussstutzen (1) und Adapter (3) bestehende Baugruppe eine gemeinsame Achse (A1) aufweist, welche gegenüber einer Achse (A2) der Anschlussbuchse (2) um einen Winkel (α) verschwenkbar ist.

10. Verbindungsanordnung nach einem der Ansprüche 1 bis 9, **dadurch gekennzeichnet, dass** der Adapter (3) in den Anschlussstutzen (1) integriert oder der Anschlussstutzen (1) in der Form des Adapters (3) ausgebildet ist.
